# FASCICULE DE BREVET EUROPEEN

(11) **EP 0 705 504 B1**
(45) Date de publication et mention de la délivrance du brevet: **12.09.2001**
(21) Numéro de dépôt: 95918028.2
(22) Date de dépôt: 20.04.1995
(51) Int. Cl.: H04B 10/18

(54) **PROCEDE DE TRANSMISSION OPTIQUE PRESENTANT UNE SENSIBILITE REDUITE A LA DISPERSION; DISPOSITIF ET SYSTEME DE TRANSMISSION POUR LA MISE EN OEUVRE DE CE PROCEDE**
VERFAHREN ZUR OPTISCHEN ÜBERTRAGUNG MIT VERMINDERTER DISPERSIONSEMPFINDLICHKEIT; ANORDNUNG UND SYSTEM ZUR AUSFÜHRUNG DES VERFAHRENS
OPTICAL TRANSMISSION METHOD WITH REDUCED SENSITIVITY TO DISPERSION, TRANSMISSION DEVICE AND SYSTEM FOR IMPLEMENTING THIS METHOD

(30) Priorité: 20.04.1994 FR 9404732
(43) Date de publication de la demande: 10.04.1996
(73) Titulaire: ALCATEL, 75008 Paris (FR)
(72) Inventeur: PRICE, Alistair, Thonsand Oaks, CA 91320 (US); UHEL, Roland, F-29121 Clohars-Carnoet (FR)
(74) Mandataire: Sciaux, Edmond
(86) Numéro de dépôt international: FR9500510
(87) Numéro de publication internationale: WO9529539

(56) Documents cités:
- ELECTRONICS LETTERS., vol.29, no.25, 9 Décembre 1993, STEVENAGE GB pages 2209 - 2211 GU ET AL '10 Gbit/s unrepeatered three-level optical transmission over 100 km of standard fibre' cité dans la demande
- IEEE GLOBAL TELECOMMUNICATIONS CONFERENCE, vol.3, Décembre 1990, SAN DIEGO, US pages 1534 - 1540 VODHANEL ET AL '10 Gbit/s modulation performance of distributed feedback lasers for optical fibre communications systems'
- PATENT ABSTRACTS OF JAPAN vol. 13, no. 113 (E-729) 17 Mars 1989 & JP,A,63 284 957 (MITSUBISHI) 22 Novembre 1988

## Description

L'invention concerne un procédé de transmission, sur une fibre optique, présentant une sensibilité réduite à la dispersion chromatique engendrée par cette fibre; un dispositif et un système de transmission pour la mise en oeuvre de ce procédé.

La distance maximale de transmission sur une fibre optique sans répéteur est limitée par l'atténuation et par la dispersion chromatique. Les amplificateurs à fibre optique dopée à l'erbium permettent de remédier à l'atténuation, par contre la dispersion chromatique reste une limitation importante pour des signaux ayant un débit élevé, tel que 10 Gbits/s. Plusieurs procédés connus permettent de compenser au moins partiellement la dispersion chromatique sur un tronçon de fibre donnée.

D'autres procédés connus vise à rendre la transmission moins sensible à la dispersion chromatique, sans modifier celle-ci. En particulier l'article intitulé "10 Gbits/s unrepeated three-level optical transmission over 100 km of standard fibre" publié par X.Gu et L.C. Blanck dans ELECTRONICS LETTERS 9 th December 1993 vol 29 n°25, décrit un procédé consistant à :
- coder une suite d'informations à transmettre, sous la forme d'un signal duo-binaire, c'est-à-dire pouvant prendre des valeurs approximativement égales à + 1, O, -1, ce signal étant obtenu en réduisant la bande passante d'un signal binaire;
- moduler une porteuse optique en fonction des valeurs prises par ce signal, pour obtenir une onde porteuse modulée en amplitude selon trois niveaux différents;
- transmettre l'onde porteuse modulée sur une fibre optique de transmission, sans utiliser de procédé particulier de compensation de la dispersion;
- démoduler l'amplitude du signal optique reçu à l'extrémité de la fibre optique, au moyen d'un photorécepteur fournissant un signal électrique représentatif de l'amplitude du signal optique reçu, et comparer ce signal à deux valeurs de référence pour restituer deux signaux binaires en parallèle;
- décoder les deux signaux binaires pour restituer une suite d'informations.

L'utilisation d'un codage duo-binaire et d'une modulation d'amplitude permet de réduire la largeur de la bande occupée par le signal transmis. Il en résulte une diminution de l'effet de la dispersion chromatique, et donc une augmentation substantielle de la distance maximale de transmission. Un autre avantage consiste en ce que l'émetteur optique et le récepteur optique peuvent avoir une bande passante plus réduite que dans le cas d'une transmission classique consistant à moduler l'amplitude de l'onde porteuse par un signal binaire.

Ce procédé connu a cependant un inconvénient : il est nécessaire de discriminer trois niveaux d'amplitude distincts dans le signal électrique fourni par le photodétecteur. Cette discrimination de trois niveaux est beaucoup plus délicate à réaliser que la discrimination de deux niveaux nécessaire pour une modulation d'amplitude par un signal binaire. D'autre part, le rapport signal sur bruit est inférieur à celui qui serait obtenu avec un signal binaire.

Le but de l'invention est de proposer un procédé de transmission optique présentant lui aussi une sensibilité réduite à la dispersion, mais qui permette de réaliser plus facilement la démodulation.

L'objet de l'invention est un procédé de transmission optique présentant une sensibilité réduite à la dispersion, consistant à :
- coder sous la forme d'un signal ternaire appelé signal de modulation une suite d'informations à transmettre, ce signal pouvant prendre trois valeurs significatives : une valeur maximale, une valeur minimale, et une valeur dite intermédiaire comprise entre la valeur maximale et la valeur minimale;
- moduler une porteuse optique en fonction des valeurs prises par le signal de modulation;
caractérisé en ce que, pour moduler cette porteuse, il consiste à émettre la porteuse avec :
- une amplitude maximale pour représenter la valeur maximale et la valeur minimale du signal de modulation filtré, en décalant la phase de la porteuse modulée de 180° environ, dans un cas par rapport à l'autre;
- une amplitude minimale pour représenter la valeur intermédiaire du signal de modulation;
et en ce que pour démoduler la porteuse optique modulée, il consiste à discriminer deux niveaux dans l'enveloppe de la puissance de la porteuse modulée, et en déduire la suite d'informations transmise.

Le procédé ainsi caractérisé présente une sensibilité réduite à la dispersion chromatique parce que la bande passante du signal transmis est réduite par le codage sous la forme d'un signal ternaire, par rapport à une modulation d'amplitude classique par un signal binaire. Il permet par exemple une liaison sur une distance supérieure à 150 km, à 10 Gbit/s, sur une fibre ayant une dispersion de 17,5 ps/nm.km. En outre, il présente l'avantage de faciliter la réalisation des moyens de démodulation de la porteuse optique, parce que la démodulation ne porte que sur l'amplitude et que cette démodulation consiste à discriminer seulement deux niveaux distincts. Enfin, le rapport signal sur bruit est meilleur que lorsque la démodulation consiste à discriminer trois niveaux.

Selon un mode de mise en oeuvre préférentiel, pour coder sous la forme d'un signal ternaire la suite d'informations à transmettre, le procédé selon l'invention consiste à :
- coder la suite d'informations sous la forme d'un signal binaire, si elle n'est pas déjà sous cette forme;
- coder ce signal binaire sous la forme d'un autre signal binaire, par un codage différentiel;
- filtrer cet autre signal binaire pour réduire sa bande passante, et obtenir ainsi un signal ternaire.

Selon un autre mode de mise en oeuvre, pour coder sous la forme d'un signal ternaire la suite d'informations à transmettre, le procédé selon l'invention consiste à :
- coder la suite d'information sous la forme d'un signal ternaire à trois niveaux discrets;
- puis à filtrer optionnellement ce signal ternaire à trois niveaux discrets, pour réduire encore plus la largeur de sa bande de fréquences.

Un autre objet de l'invention est un dispositif de transmission pour la mise en oeuvre du procédé selon l'invention, comportant :
- des moyens pour coder sous la forme d'un signal ternaire, dit de modulation, une suite d'informations à transmettre; ce signal ternaire pouvant prendre trois valeurs significatives : une valeur maximale, une valeur minimale, et une valeur intermédiaires comprises entre la valeur maximale et la valeur minimale;
- des moyens pour moduler une porteuse optique en fonction des valeurs prises par le signal de modulation;
et caractérisé en ce que les moyens pour moduler une porteuse optique comportent un modulateur fournissant une onde porteuse modulée ayant :
- une amplitude maximale quand le signal de modulation a sa valeur maximale et quand il a sa valeur minimale, en décalant la phase de la porteuse modulée de 180° environ dans un cas par rapport à l'autre;
- une amplitude minimale quand le signal de modulation a sa valeur intermédiaire;

Selon un mode de réalisation préférentiel, les moyens pour coder sous la forme d'un signal ternaire la suite d'informations à transmettre comportent :
- des moyens pour coder ladite suite d'informations sous la forme d'un signal binaire, si elle n'est pas déjà sous cette forme;
- des moyens pour coder ce signal binaire sous la forme d'un autre signal binaire, par un codage différentiel;
- des moyens pour filtrer cet autre signal binaire pour réduire la largeur de sa bande de fréquences, et obtenir un signal ternaire.

Selon un autre mode réalisation, les moyens pour coder comportent :
- des moyens pour coder ladite suite d'informations sous la forme d'un signal ternaire, à trois niveaux discrets, si elle n'est pas déjà sous cette forme;
- et des moyens optionnels pour filtrer ce signal ternaire en réduisant la largeur de sa bande de fréquences.

L'invention a en outre pour objet un système de transmission , comportant :
- un dispositif de transmission modulant une porteuse optique par une suite d'informations ;
- une liaison optique de transmission, dont une extrémité est couplée à une sortie du dispositif de transmission ;
- des moyens pour démoduler la porteuse optique modulée, ayant une entrée couplée à une seconde extrémité de la liaison, et fournissant un signal représentant l'enveloppe de la puissance de cette porteuse optique modulée;
- un comparateur pour comparer ce signal à une valeur de référence et en déduire un signal binaire représentant la suite d'informations transmise;
caractérisé en ce qu'il comporte un dispositif de transmission selon l'invention.

L'invention sera mieux comprise et d'autres caractéristiques apparaîtront à l'aide de la description ci-dessous et des figures l'accompagnant :
- la figure 1 représente le schéma synoptique d'un exemple de réalisation du système de transmission selon l'invention;
- les figures 2 et 3 représentent des chronogrammes illustrant deux variantes de mise en oeuvre du procédé selon l'invention;
- la figure 4 représente des chronogrammes illustrant le fonctionnement des moyens pour moduler, lorsqu'il sont constitués par un modulateur de type Mach-Zehnder.

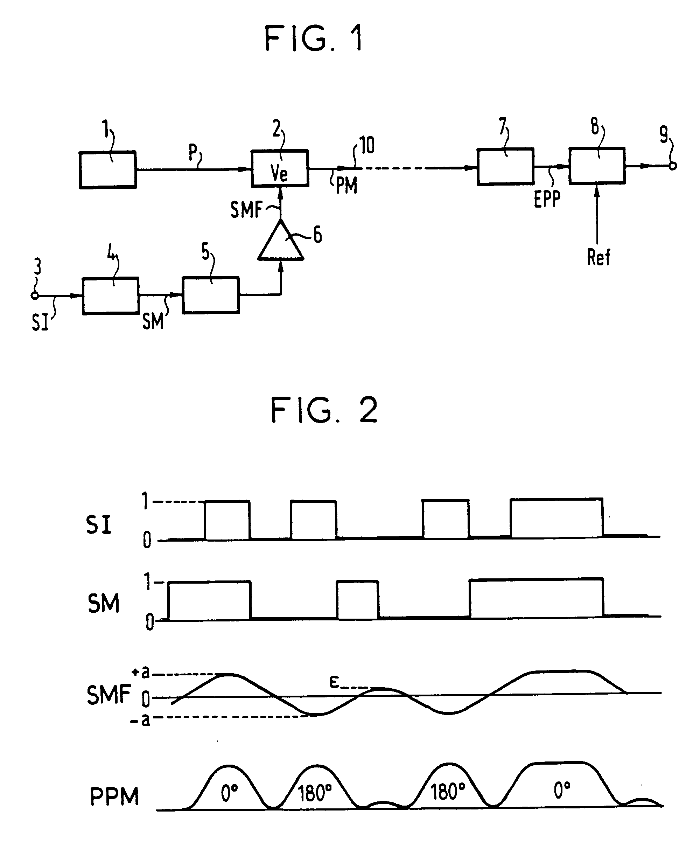

La figure 1 représente le schéma synoptique d'un exemple de réalisation du système de transmission optique selon l'invention, pour la mise en oeuvre du procédé selon l'invention. Cet exemple comporte :
- un laser 1 émettant une onde porteuse P d'amplitude constante;
- un modulateur de type Mach-Zehnder, 2, recevant l'onde porteuse fournie par le laser 1 et fournissant une onde porteuse modulée PM, cette onde étant modulée en fonction de la valeur Ve appliquée à une entrée de commande;
- une liaison optique de transmission, 10, à fibre optique, couplée à la sortie du modulateur 2;
- une borne d'entrée 3 à laquelle est appliquée une suite d'informations SI, qui est constituée par une suite de valeurs binaires, dans cet exemple;
- un codeur différentiel 4 ayant une entrée reliée à la borne 3, et ayant une sortie fournissant un autre signal binaire SM appelé signal de modulation, représentant la suite d'informations SI, le signal SM occupant une largeur de bande égale à 0,44 fois le débit binaire de ce signal SM;
- un filtre passe-bas 5 ayant une entrée reliée à la sortie du codeur 4, et ayant une bande passante dont la largeur est égale à 0,3 fois le débit binaire du signal SM; sa sortie fournissant donc un signal de modulation filtré, SMF, qui est un signal duo-binaire ayant une bande passante réduite égale à 0,25 fois le débit binaire du signal SM, procurant une réduction de la sensibilité à la dispersion;
- un amplificateur, 6, ayant une entrée reliée à une sortie du filtre 5, et ayant une sortie fournissant un signal SMF à l'entrée de commande du modulateur 2, ce signal SMF étant le signal de modulation SM filtré par le filtre 5 et amplifié par l'amplificateur 6;
- un photorécepteur 7 couplé à l'extrémité de la liaison 10, ayant pour fonction de fournir un signal électrique EPP proportionnel à l'enveloppe de la puissance optique reçue, indépendamment de la phase;
- un comparateur 8 comportant une entrée reliée à une sortie du photorécepteur 7 et une entrée recevant une valeur de référence Ref; et ayant pour fonction de comparer à cette valeur de référence la valeur du signal EPP fourni par le photorécepteur 7, et en déduire un signal binaire qui est fourni à une borne de sortie 9, ce signal binaire étant identique à la suite d'informations SI sans qu'il soit nécessaire d'effectuer un décodage supplémentaire.

La figure 2 représente à titre d'exemple les chronogrammes:
- d'une suite d'informations SI constituée des valeurs binaires O 1 O 1 O O 1 O 1 1 O O;
- du signal de modulation SM obtenu par un codage binaire différentiel tel que un O provoque une transition, et un 1 ne provoque pas de transition;
- du signal de modulation filtré et amplifié, SMF, correspondant à ce signal SM, ce signal SMF ayant trois valeurs significatives : -a, O±ε, +a;
- de l'enveloppe PPM de la puissance de la porteuse modulée PM, avec les valeurs du décalage de phase appliqué à cette porteuse modulée.

Selon une variante de mise en oeuvre, un signal de modulation peut être obtenu par un codage ternaire à trois niveaux discrets. Ce signal de modulation occupe, avant tout filtrage, une bande de fréquences réduite par rapport à celle du signal binaire d'origine. Un filtrage optionnel peut réduire encore la largeur de la bande de fréquences. Si la suite d'informations à transmettre n'est pas sous la forme d'une suite binaire, le codage ternaire peut être réalisé directement sans passer par un codage binaire.

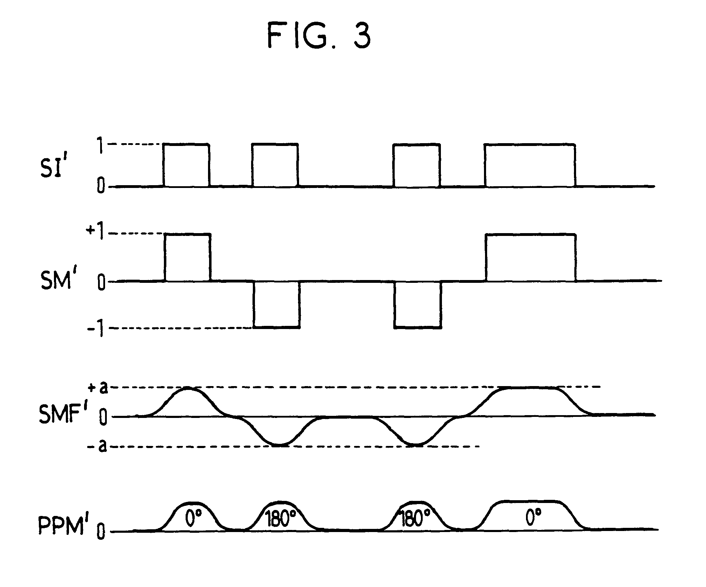

La figure 3 illustre cette variante en représentant à titre d'exemple les chronogrammes :
- d'une suite d'informations à transmettre SI', constituée des valeurs binaires O 1 O 1 O O 1 O 1 1 O O;
- du signal de modulation SM' obtenu par un codage ternaire à trois valeurs discrètes, -1, O, +1; ce signal ayant des flancs raides;
- du signal de modulation filtré SMF' correspondant à ce signal SM', ce signal SMF' ayant trois valeurs significatives -a, O±ε, +a, et ayant des flancs très arrondis;
- de l'enveloppe PPM' de la puissance de la porteuse optique modulée, avec les valeurs du décalage de phase appliqué à cette porteuse modulée.

Dans cet exemple, le codage ternaire est réalisé selon la règle qu'un O est représenté par O; et qu'un 1 est représenté par +1 ou -1, sans qu'il y ait de transition directe de +1 à -1 ou inversement, c'est-à-dire qu'il y a toujours un O entre +1 et -1, ou entre -1 et +1. L'alternance des +1 et des -1 pour représenter des 1 peut être réalisée par différents procédés. Par exemple, il peut y avoir changement de signe s'il y a un nombre impair de 0 entre deux 1, et pas de changement de signe s'il y a un nombre pair de 0.

La largeur de la bande cie fréquence occupée par un tel signal ternaire SM' est égale à 0,22 fois le débit binaire de la suite d'informations SM'. Un filtrage optionnel peut réduire encore plus la bande de fréquences occupée par le signal ternaire SM'. La bande passante du filtre peut être égale, par exemple, à 0,6 fois le débit binaire du signal binaire SI'. La valeur de cette bande passante n'est pas critique.

Le signal de modulation filtré SMF' n'a donc pas les flancs abrupts du signal ternaire SM', mais il prend trois valeurs distinctes -a, O, +a correspondant respectivement aux valeurs -1, O, +1 du signal ternaire SM'. A cause de l'interférence entre des symboles successifs, ces trois valeurs distinctes fluctuent au voisinage des trois valeurs -a, O, +a, qui sont considérées comme valeurs significatives pour représenter -1, O, +1.

Tout autre procédé connu de codage à réponse partielle pourrait être mis en oeuvre pour obtenir un signal de modulation ayant trois valeurs significatives.

Le schéma synoptique représenté sur la figure 1 convient pour mettre en oeuvre cette variante. Seul le codeur 4 et la largeur de bande du filtre 5 sont modifiés. Au lieu d'être fait par un filtre 5, le filtrage peut être réalisé par l'amplificateur 6 ou le modulateur 2 si leur bande passante est inférieure à la largeur de bande du signal SM'.

L'enveloppe PPM, respectivement PPM', de la puissance de la porteuse modulée est maximale lorsque le signal de modulation SM, respectivement SM', est égal à +1 ou -1; et elle est minimale, nulle ou voisine de zéro, lorsque le signal de modulation SM, respectivement SM', est égal à O. Le modulateur 5 retarde la porteuse dans tous les cas, mais il décale sa phase différemment selon le signe du signal de modulation filtré SMF, respectivement SMF', lequel correspond au signe du signal de modulation non filtré SM, respectivement SM'. Dans les deux exemples décrits en se référant aux figures 2 et 3, un signe positif du signal SMF, respectivement SMF', est traduit par un décalage θ1, et un signe négatif est traduit par un décalage de θ2 = θ1 + 180°. Toute autre couple de valeurs de phase conviendrait, à condition qu'il y ait une différence approximativement égale à ± 180° entre les deux valeurs.

Pour que la démodulation restitue un signal binaire représentatif de la suite d'informations transmise deux conditions sont suffisantes : que la valeur maximale et la valeur minimale du signal de modulation appliqué au modulateur représentent une même valeur binaire représentant une information élémentaire de la suite d'informations à transmettre (1 dans cet exemple); et que la valeur intermédiaire représente la valeur binaire complémentaire (O dans cet exemple).

Si ces conditions sont réalisées, il est alors possible d'obtenir un signal binaire, représentant la suite d'informations transmise, en comparant l'enveloppe de la puissance du signal reçu à une valeur de seuil. Un décodage de ce signal binaire peut éventuellement être nécessaire si la suite d'informations transmise n'était pas une suite binaire avant le codage différentiel ou le codage ternaire. Par exemple s'il s'agit de symboles M-aires codés directement en binaire différentiel, un transcodage binaire-M-aire est nécessaire pour reconstituer la suite d'informations dans son format d'origine.

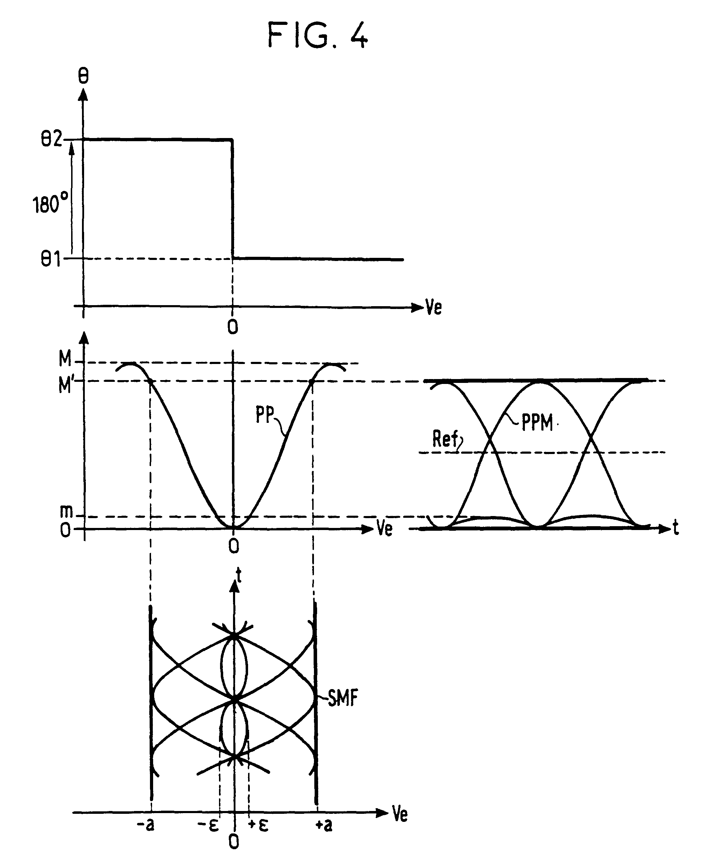

La figure 4 illustre le fonctionnement du modulateur 2, qui est du type Mach-Zehnder. Elle représente :
- le graphe, en fonction du temps t, du signal de modulation filtré et amplifié, SMF, dont la valeur Ve commande le modulateur 2;
- le graphe, en fonction de la valeur Ve, de la puissance PP de la porteuse optique modulée fournie par le modulateur 2, ce graphe constituant la caractéristique de fonctionnement en puissance pour ce modulateur 2;
- le graphe, en fonction du temps t, de l'enveloppe PPM de la puissance de la porteuse optique modulée fournie par le modulateur 2 lorsque le signal SMF est appliqué à son entrée de commande;
- le graphe, en fonction de la valeur Ve, de la phase θ de la porteuse optique modulée fournie par le modulateur 2, ce graphe constituant la caractéristique de fonctionnement en phase pour ce modulateur 2.

Le signal de modulatior filtré et amplifié SMF est un signal duo-binaire classique. Il est centré sur zéro. Il a pour valeur minimale -a; pour valeur maximale +a; et il prend deux valeurs intermédiaires -ε et +ε, qui sont voisines de O. Le modulateur Mach-Zehnder 2 est polarisé de façon à ne produire aucune modulation de fréquence, et pour que le graphe PP, caractéristique du fonctionnement en puissance, ait une forme en V symétrique par rapport à un axe correspondant à la valeur Ve=O. Cette caractéristique est stabilisée par des moyens classiques pour éviter une dérive au cours du temps. Chaque branche du graphe PP a une pente monotone entre O et une valeur maximale M. L'amplitude du signal de modulation filtré SMF est amplifiée par l'amplificateur 6 à une valeur a permettant d'obtenir à la sortie du modulateur 2 une puissance de porteuse comprise entre O et M', M' étant une valeur légèrement inférieure ou égale à M.

Lorsque le signal de modulation filtré et amplifié SMF a une valeur positive, le modulateur 2 fournit la porteuse modulée avec un décalage de phase constant θ1 par rapport à une référence donnée. Par contre, lorsque le signal SMF a une valeur négative, le modulateur 2 fournit la porteuse modulée avec un décalage de phase θ2= θ1 + 180° par rapport à la même référence. Par conséquent, lorsque le signal SMF passe d'une valeur voisine de +a à une valeur voisine de -a, le modulateur 2 provoque un saut de phase de 180°.

La combinaison de la modulation de puissance selon le graphe PP et du saut de phase selon le graphe θ, est une modulation d'amplitude appelée classiquement modulation à porteuse supprimée.

Le graphe PPM de l'enveloppe de la puissance de la porteuse optique modulée par le signal SMF a une valeur maximale qui est égale à M', et deux valeurs minimales, O et m, m étant voisin de O. Le photorécepteur 7 fournit un signal électrique EPP représentant l'enveloppe de la puissance du signal optique reçu. Le graphe du signal EPP est identique au graphe PPM représenté sur la figure 3, en l'absence de bruit. Il est aisé de discriminer un niveau haut et un niveau bas dans ce graphe, en comparant la valeur fournie par le photorécepteur 7 à une valeur de référence Ref fixée entre M' et m. Le signal binaire issu de la comparaison restitue directement la suite binaire SI, dans cet exemple.

La portée de l'invention n'est pas limitée à l'utilisation d'un modulateur de type Mach Zehnder, car il est possible d'utiliser tout moyen de modulation ayant une caractéristique permettant d'obtenir une modulation d'amplitude et un saut de phase de 180°.

## Revendications

1. Procédé de transmission optique présentant une sensibilité réduite à la dispersion, consistant à :
- coder sous la forme d'un signal (SMF) ternaire appelé signal de modulation, une suite d'informations à transmettre (SI); ce signal pouvant prendre trois valeurs significatives : une valeur maximale (+a), une valeur minimale (-a), et une valeur intermédiaire (O±ε) comprise entre la valeur maximale et la valeur minimale;
- et moduler une porteuse optique en fonction des valeurs (-a, O±ε, + a) prises par le signal de modulation (SMF) ;
**caractérisé en ce que** pour moduler cette porteuse il consiste à émettre la porteuse avec :
- une amplitude maximale pour représenter la valeur maximale (+a) et la valeur minimale (-a) du signal de modulation (SMF), en décalant la phase de la porteuse modulée de 180° environ, dans un cas par rapport à l'autre;
- une amplitude minimale pour représenter la valeur intermédiaire (O±ε) du signal de modulation (SMF);
et en ce que pour démoduler la porteuse optique modulée, il consiste à discriminer deux niveaux (O et M') dans un signal (EPP) représentant l'enveloppe de la puissance de la porteuse modulée, et en déduire la suite d'informations transmises.

2. Procédé selon la revendication 1, **caractérisé en ce que** pour coder sous la forme d'un signal (SMF) ternaire une suite d'informations à transmettre, il consiste à :
- coder la suite d'informations sous la forme d'un signal binaire (SI), si elle n'est pas déjà sous cette forme;
- coder ce signal binaire (SI) sous la forme d'un autre signal binaire (SM), par un codage différentiel;
- filtrer cet autre signal binaire (SM) pour réduire sa bande passante, et obtenir ainsi un signal ternaire (SMF).

3. Procédé selon la revendication 1, **caractérisé en ce que**, pour coder sous la forme d'un signal (SM') ternaire, une suite d'informations (SI') à transmettre, il consiste à coder la suite d'information (SI') sous la forme d'un signal ternaire (SM') à trois niveaux discrets (-1, O, +1).

4. Procédé selon la revendication 3, **caractérisé en ce qu'**il consiste en outre à filtrer ce signal ternaire (SM') à trois niveaux discrets, pour réduire la largeur de sa bande de fréquences, et obtenir un signal ternaire filtré (SMF').

5. Dispositif de transmission optique, comportant :
- des moyens (4) pour coder sous la forme d'un signal ternaire (SMF) appelé signal de modulation une suite d'informations à transmettre (SI); ce signal pouvant prendre trois valeurs significatives : une valeur minimale (-a), une valeur maximale (+a), et une valeur dite intermédiaire (O±ε) comprise entre la valeur maximale et la valeur minimale;
- des moyens (1, 2, 6 ) pour moduler une porteuse optique (P) en fonction des valeurs prises par le signal de modulation (SMF) ;
**caractérisé en ce que** les moyens pour moduler une porteuse optique comportent un modulateur (2) fournissant une onde porteuse modulée ayant :
- une amplitude maximale quand le signal de modulation (SMF) a sa valeur maximale (+a) et quand il a sa valeur minimale (-a), en décalant la phase (θ) de la porteuse modulée de 180° environ dans un cas par rapport à l'autre;
- une amplitude minimale quand le signal de modulation (SMF) a sa valeur intermédiaire (O±ε).

6. Dispositif selon la revendication 5, **caractérisé en ce que** les moyens (4) pour coder sous la forme d'un signal ternaire une suite d'informations comportent :
- des moyens pour coder ladite suite d'informations sous la forme d'un signal binaire (SI), si elle n'est pas déjà sous cette forme;
- des moyens (4) pour coder ce signal binaire (SI) sous la forme d'un autre signal binaire (SM), par un codage différentiel;
- des moyens (5) pour filtrer cet autre signal binaire (SM) pour réduire la largeur de sa bande de fréquences, et obtenir un signal ternaire (SMF).

7. Dispositif selon la revendication 5, **caractérisé en ce que** les moyens (4) pour coder sous la forme d'un signal ternaire une suite d'informations comportent des moyens pour coder ladite suite d'informations (SI') sous la forme d'un signal ternaire (SM') à trois niveaux discrets (-1, O, +1) si elle n'est pas déjà sous cette forme.

8. Dispositif selon la revendication 7, **caractérisé en ce qu'**il comporte en outre des moyens (5) pour filtrer ce signal ternaire (SM') en réduisant la largeur de sa bande de fréquences.

9. Dispositif selon la revendication 5, **caractérisé en ce que** les moyens pour moduler (1, 2, 6) comportent un modulateur de type Mach-Zehnder.

10. Système de transmission , comportant :
- un dispositif de transmission (1, 2, 4, 6) modulant une porteuse optique par une suite d'informations ;
- une liaison optique de transmission (10), dont une extrémité est couplée à une sortie du dispositif de transmission ;
- des moyens (7) pour démoduler la porteuse optique modulée, ayant une entrée couplée à une seconde extrémité de la liaison, et fournissant un signal (EPP) représentant l'enveloppe de la puissance de cette porteuse optique modulée;
- un comparateur (8) pour comparer ce signal (EPP) à une valeur de référence (Ref) et en déduire un signal binaire représentant la suite d'informations transmise;
**caractérisé en ce que** ledit dispositif de transmission comporte (1, 2, 4, 6) est un dispositif selon l'une des revendications 5 à 9.

## Claims

1. Optical transmission method having reduced sensitivity to dispersion, wherein:
- a data pattern (SI) to be transmitted is coded in the form of a ternary modulation signal (SMF) which can assume three meaningful values: a maximal value (+a), a minimal value (-a) and an intermediate value (0±ε) between the maximal value and the minimal value; and
- an optical carrier is modulated according to the values (-a, 0±ε, +a) assumed by the modulation signal (SMF);
**characterized in that**, to modulate said carrier, the carrier is transmitted with:
- a maximal amplitude to represent the maximal value (+a) and the minimal value (-a) of the modulation signal (SMF), the phase of the modulated carrier being shifted approximately 180° in one case relative to the other;
- a minimal amplitude to represent the intermediate value (0±ε) of the modulation signal (SMF);
and in that, to demodulate the modulated optical carrier, two levels (0 and M') are discriminated in a signal (EPP) representing the envelope of the power of the modulated carrier and the data pattern transmitted is deduced therefrom.

2. Method according to claim 1 **characterized in that** to code a data pattern to be transmitted in the form of a ternary signal (SMF):
- the data pattern is coded in the form of a binary signal (SI) if it is not already in this form;
- this binary signal (SI) is coded in the form of another binary signal (SM) by differential coding; and
- this other binary signal (SM) is filtered to reduce its bandwidth and thereby obtain a ternary signal (SMF).

3. Method according to claim 1 **characterized in that** the data pattern (SI') to be transmitted is coded in the form of a ternary signal (SM') with three discrete levels (-1, 0, +1).

4. Method according to claim 3 **characterized in that** the ternary signal (SM') with three discrete levels is filtered to reduce its bandwidth and thereby obtain a filtered ternary signal (SMF').

5. Optical transmission device including:
- means (4) for coding a data pattern (SI) to be transmitted in the form of a ternary modulation signal (SMF) which can assume three meaningful values: a minimal value (-a), a maximal value (+a) and an intermediate value (0±ε) between the maximal value and the minimal value; and
- means (1, 2, 6) for modulating an optical carrier (P) according to the values assumed by the modulation signal (SMF);
**characterized in that** the optical carrier modulator means include a modulator (2) supplying a modulated carrier having:
- a maximal amplitude when the modulation signal (SMF) has its maximal value (+a) or its minimal value (-a), the phase (θ) of the modulated carrier being shifted approximately 180° in one case relative to the other; and
- a minimal amplitude when the modulation signal (SMF) has its intermediate value (0±ε).

6. Device according to claim 5 **characterized in that** the means (4) for coding a data pattern in the form of a ternary signal include:
- means for coding said data pattern in the form of a binary signal (SI) if it is not already in this form;
- means (4) for coding said binary signal (SI) in the form of another binary signal (SM) by differential coding; and
- means (5) for filtering said other binary signal (SM) to reduce its bandwidth and thereby to obtain a ternary signal (SMF).

7. Device according to claim 5 **characterized in that** the means (4) for coding a data pattern in the form of a ternary signal code said data pattern (SI') in the form of a ternary signal (SM') with three discrete levels (-1, 0, +1) if it is not already in this form.

8. Device according to claim 7 **characterized in that** it further comprises means (5) for filtering said ternary signal (SM') by reducing its bandwidth.

9. Device according to claim 5 **characterized in that** the modulator means (1, 2, 6) comprise a Mach-Zehnder type modulator.

10. Transmission system including:
- a transmitter device (1, 2, 4, 6) for modulating an optical carrier with a data pattern;
- an optical transmission link (10) one end of which is coupled to an output of the transmitter device;
- means (7) for demodulating the modulated optical carrier having an input coupled to a second end of the link and supplying a signal (EPP) representing the envelope of the power of said modulated optical carrier; and
- a comparator (8) for comparing said signal (EPP) to a reference value (Ref) and deducing a binary signal representing the data pattern transmitted;
**characterized in that** said transmitter device (1, 2, 4, 6) is a device according to any one of claims 5 to 9.

## Patentansprüche

1. Verfahren zur optischen Übertragung mit verminderter Dispersionsempfindlichkeit, das darin besteht:
- eine zu übertragende Informationenfolge (SI) in die Form eines ternären Signals (SMF) zu codieren, das Modulationssignal genannt wird; wobei dieses Signal drei signifikante Werte annehmen kann: einen Maximalwert (+a), einen Minimalwert (-a) und einen Zwischenwert (0±∈), der zwischen dem Maximalwert und dem Minimalwert liegt;
- und eine optische Trägerwelle in Abhängigkeit von den vom Modulationssignal (SMF) angenommenen Werten (-a, O±∈, +a) zu modulieren;
**dadurch gekennzeichnet, dass** es zum Modulieren dieser Trägerwelle darin besteht die Trägerwelle auszusenden mit:
- einer maximalen Amplitude zum Darstellen des Maximalwertes (+a) und des Minimalwertes (-a) des Modulationssignals (SMF) unter Verschiebung der Phase der modulierten Trägerwelle in einem Falle in Bezug auf den anderen um etwa 180°;
- einer minimalen Amplitude zum Darstellen des Zwischenwertes (0±∈) des Modulationssignals (SMF);
und dass es zum Demodulieren der modulierten optischen Trägerwelle darin besteht zwei Niveaus (0 und M') in einem Signal (EPP), das die Einhüllende der Leistung der modulierten Trägerwelle darstellt, zu unterscheiden und daraus die Folge von übertragenen Informationen herzuleiten.

2. Verfahren nach Anspruch 1, **dadurch gekennzeichnet, dass** es zum Codieren einer zu übertragenden Informationenfolge in die Form eines ternären Signals (SMF) darin besteht:
- die Informationenfolge in die Form eines binären Signals (SI) zu codieren, wenn sie nicht bereits diese Form hat;
- dieses binäre Signal (SI) durch differenzielle Codierung in die Form eines weiteren binären Signals (SM) zu codieren;
- dieses weitere binäre Signal (SM) zu filtern, um seine Bandbreite zu verringern und so ein ternäres Signal (SMF) zu erhalten.

3. Verfahren nach Anspruch 1, **dadurch gekennzeichnet, dass** es zum Codieren einer zu übertragenden Informationenfolge (SI') in die Form eines ternären Signals (SM') darin besteht die Informationenfolge (SI') in die Form eines ternären Signals (SM') mit drei diskreten Niveaus (-1, 0, +1) zu codieren.

4. Verfahren nach Anspruch 3, **dadurch gekennzeichnet, dass** es außerdem darin besteht dieses ternäre Signal (SM') mit drei diskreten Niveaus zu filtern, um die Breite seines Frequenzbandes zu verringern und ein gefiltertes ternäres Signal (SMF') zu erhalten.

5. Vorrichtung zur optischen Übertragung, welche umfasst:
- Mittel (4) zum Codieren einer zu übertragenden Informationenfolge (SI) in die Form eines ternären Signals (SMF), das Modulationssignal genannt wird; wobei dieses Signal drei signifikante Werte annehmen kann: einen Minimalwert (-a), einen Maximalwert (+a) und einen Zwischenwert genannten Wert (0±∈), der zwischen dem Maximalwert und dem Minimalwert liegt;
- Mittel (1, 2, 6) zum Modulieren einer optischen Trägerwelle (P) in Abhängigkeit von den vom Modulationssignal (SMF) angenommenen Werten;
**dadurch gekennzeichnet, dass** die Mittel zum Modulieren einer optischen Trägerwelle einen Modulator (2) umfassen, der eine modulierte Trägerwelle liefert, die aufweist:
- eine maximale Amplitude, wenn das Modulationssignal (SMF) seinen Maximalwert (+a) und wenn es seinen Minimalwert (-a) aufweist unter Verschiebung der Phase (θ) der modulierten Trägerwelle in einem Falle in Bezug auf den anderen um etwa 180°;
- eine minimalen Amplitude, wenn das Modulationssignal (SMF) seinen Zwischenwert (0±∈) aufweist.

6. Vorrichtung nach Anspruch 5, **dadurch gekennzeichnet, dass** die Mittel (4) zum Codieren einer Informationenfolge in die Form eines ternären Signals umfasst:
- Mittel zum Codieren der Informationenfolge in die Form eines binären Signals (SI), wenn sie nicht bereits diese Form hat;
- Mittel (4) zum Codieren dieses binären Signals (SI) durch differenzielle in die Form eines weiteren binären Signals (SM);
- Mittel (5) zum Filtern dieses weiteren binären Signals (SM), um die Breite seines Frequenzbandes zu verringern und ein ternäres Signal (SMF) zu erhalten.

7. Vorrichtung nach Anspruch 5, **dadurch gekennzeichnet, dass** die Mittel (4) zum Codieren einer Informationenfolge in die Form eines ternären Signals Mittel zum Codieren der Informationenfolge (SI') in die Form eines ternären Signals (SM') mit drei diskreten Niveaus (-1, 0, +1), wenn es nicht bereits diese Form hat, umfasst.

8. Vorrichtung nach Anspruch 7, **dadurch gekennzeichnet, dass** sie außerdem Mittel (5) zum Filtern dieses ternären Signals (SM') unter Verringerung der Breite seines Frequenzbandes umfasst.

9. Vorrichtung nach Anspruch 5, **dadurch gekennzeichnet, dass** die Mittel (1, 2, 6) zum Modulieren einen Modulator vom Mach-Zehnder-Typ umfassen.

10. Übertragungssystem, welches umfasst:
- eine Übertragungsvorrichtung (1, 2, 4, 6), die eine optische Trägerwelle mit einer Informationenfolge moduliert;
- eine optische Übertragungsverbindung (10), deren eines Ende an einen Ausgang der Übertragungsvorrichtung gekoppelt ist;
- Mittel (7) zum Demodulieren der modulierten optischen Trägerwelle, die einen an ein zweites Ende der Verbindung gekoppelten Eingang aufweisen und ein Signal (EPP) liefern, das die Einhüllende der Leistung dieser modulierten optischen Trägerwelle darstellt;
- einen Komparator (8) zum Vergleichen dieses Signals (EPP) mit einem Bezugswert (Ref) und Herleiten eines binären Signals daraus, das die übertragene Informationenfolge darstellt;
**dadurch gekennzeichnet, dass** die enthaltene Übertragungsvorrichtung (1, 2, 4, 6) eine Vorrichtung nach einem der Ansprüche 5 bis 9 ist.
